(19) Europäisches Patentamt
European Patent Office
Office européen des brevets

(11) **EP 3 840 209 B1**

(12) **FASCICULE DE BREVET EUROPEEN**

(45) Date de publication et mention de la délivrance du brevet:
**05.01.2022 Bulletin 2022/01**

(21) Numéro de dépôt: **20214840.9**

(22) Date de dépôt: **17.12.2020**

(51) Int Cl.:
*H02M 7/797* (2006.01)     *H02M 7/537* (2006.01)
*H02M 3/335* (2006.01)     *H02M 1/12* (2006.01)
*H02M 1/32* (2007.01)

(54) **CONVERTISSEUR ELECTRIQUE**

**ELEKTRISCHER LEISTUNGSWANDLER**

**ELECTRICAL CONVERTER**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.12.2019 FR 1914775**

(43) Date de publication de la demande:
**23.06.2021 Bulletin 2021/25**

(73) Titulaire: **Commissariat à l'Energie Atomique et aux Energies Alternatives**
**75015 Paris (FR)**

(72) Inventeurs:
• **MAYNARD, Xavier**
**38054 Grenoble Cedex 09 (FR)**
• **DESPESSE, Ghislain**
**38054 Grenoble Cedex 09 (FR)**

(74) Mandataire: **INNOV-GROUP**
**310, avenue Berthelot**
**69372 Lyon Cedex 08 (FR)**

(56) Documents cités:
**US-A1- 2018 287 503**

• RIVAS J M ET AL: "A High-Frequency Resonant Inverter Topology With Low-Voltage Stress", IEEE TRANSACTIONS ON POWER ELECTRONICS, INSTITUTE OF ELECTRICAL AND ELECTRONICS ENGINEERS, USA, vol. 23, no. 4, 1 juillet 2008 (2008-07-01), pages 1759-1771, XP011229686, ISSN: 0885-8993, DOI: 10.1109/TPEL.2008.924616
• GU LEI ET AL: "High-Frequency Resonant Converter with Synchronous Rectification for High Conversion Ratio and Variable Load Operation", 2018 INTERNATIONAL POWER ELECTRONICS CONFERENCE (IPEC-NIIGATA 2018 -ECCE ASIA), IEEJ INDUSTRY APPLICATION SOCIETY, 20 mai 2018 (2018-05-20), pages 632-638, XP033428561, DOI: 10.23919/IPEC.2018.8507671
• GLASER J S ET AL: "A 500 W push-pull dc-dc power converter with a 30 MHz switching frequency", APPLIED POWER ELECTRONICS CONFERENCE AND EXPOSITION (APEC), 2010 TWENTY-FIFTH ANNUAL IEEE, IEEE, PISCATAWAY, NJ, USA, 21 février 2010 (2010-02-21), pages 654-661, XP031649802, ISBN: 978-1-4244-4782-4

**EP 3 840 209 B1**

**Description**

L'invention concerne un convertisseur électrique choisi dans le groupe constitué d'un onduleur apte à générer une tension alternative à partir d'une tension continue et d'un redresseur apte à générer une tension continue à partir d'une tension alternative.

De nombreux convertisseurs électriques sont connus. En particulier, un convertisseur connu particulièrement avantageux est l'onduleur connu sous le terme d'onduleur de classe $\Phi_2$ ou EF$_2$.

L'invention vise à proposer un convertisseur électrique qui présente les mêmes avantages qu'un onduleur de classe $\Phi_2$ tout en présentant un rendement amélioré ou un encombrement plus réduit.

Elle a donc pour objet un tel convertisseur électrique conforme à la revendication 1.

L'invention sera mieux comprise à la lecture de la description qui va suivre, donnée uniquement à titre d'exemple non limitatif et faite en se référant aux dessins sur lesquels :

- la figure 1 est un schéma électrique d'un convertisseur électrique ;
- la figure 2 est un schéma électrique équivalent d'un résonateur piézoélectrique utilisé dans le convertisseur de la figure 1 ;
- les figures 3 et 4 sont des graphes illustrant les performances du convertisseur de la figure 1 ;
- les figures 5 et 6 sont des schémas électroniques alternatifs du convertisseur électrique de la figure 1 ;
- la figure 7 est un schéma électronique d'un autre mode de réalisation d'un convertisseur électrique, et
- la figure 8 est un schéma électronique d'un convertisseur continu-continu.

Dans la suite de cette description, les caractéristiques et fonctions bien connues de l'homme du métier ne sont pas décrites en détail.

Dans cette description, des exemples détaillés de modes de réalisation sont d'abord décrits dans le chapitre I en référence aux figures. Ensuite, dans un chapitre II suivant, des variantes de ces modes de réalisation sont présentées. Enfin, les avantages des différents modes de réalisation sont présentés dans un chapitre III.

**Chapitre I : Exemples de modes de réalisation :**

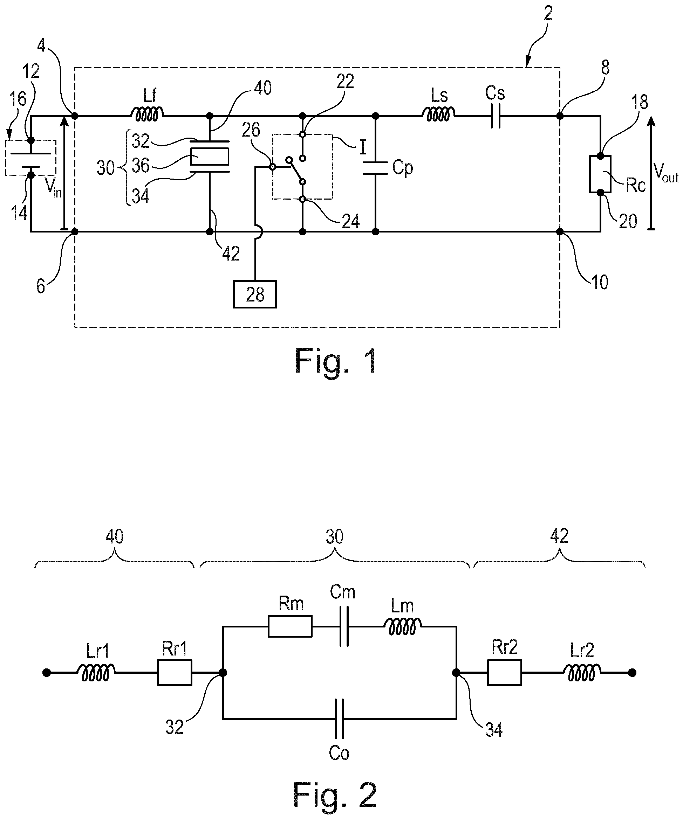

La figure 1 représente un onduleur réversible 2 comportant deux ports 4 et 6 d'entrée et deux ports 8 et 10 de sortie.

Un onduleur réversible est un convertisseur électrique particulier qui est aussi bien capable de fonctionner comme un onduleur que comme un redresseur. En fait, pour changer de fonctionnement, il suffit d'inverser les positions de la charge et de la source d'alimentation. Plus précisément, l'onduleur réversible 2 fonctionne comme un onduleur lorsqu'une source d'alimentation continue est raccordée entre ses ports d'entrée 4 et 6 et une charge est raccordée entre ses ports de sortie 8 et 10. A l'inverse, l'onduleur réversible 2 fonctionne comme un redresseur lorsqu'une charge est raccordée entre ses ports d'entrée 4 et 6 et une source d'alimentation alternative est raccordée entre ses ports de sortie 8 et 10.

Par la suite, la description est faite dans le cas particulier où l'onduleur réversible 2 est utilisé comme un onduleur. Toutefois, comme indiqué ci-dessus, il peut facilement être utilisé comme un redresseur en inversant simplement la position de la charge et de la source d'alimentation.

Les ports 4 et 6 sont directement raccordés électriquement aux bornes 12 et 14 d'une source 16 de tension continue V$_{in}$.

Par la suite, sauf indication contraire, le terme « raccorder » désigne le fait de raccorder électriquement entre eux deux composants, typiquement, par une piste ou un fil électrique. Lorsqu'il est précisé qu'un premier et un second composant sont « directement » raccordés entre eux, cela signifie qu'ils sont raccordés entre eux sans passer par l'intermédiaire d'un autre composant électrique de l'onduleur. Autrement dit, ils sont raccordés entre eux en utilisant seulement une piste ou un fil électrique qui s'étend depuis une borne électrique du premier composant jusqu'à une borne électrique du second composant.

La tension V$_{in}$ peut être quelconque. Toutefois, elle est classiquement supérieure à 1 Vdc ou 5 Vdc et peut dépasser, pour certaines applications, 50 Vdc ou 100 Vdc. A l'inverse, la tension V$_{in}$ est généralement inférieure à 10 000 Vdc ou 1000 Vdc.

Les ports 8 et 10 sont les ports entre lesquels est délivrée une tension alternative V$_{out}$ générée à partir de la tension V$_{in}$ par l'onduleur 2. La tension V$_{out}$ est une tension alternative dont la fréquence fondamentale est égale à une fréquence f$_s$. Ainsi, dans le spectre de puissance de la tension V$_{out}$, l'essentielle de la puissance électrique de la tension V$_{out}$ se trouve à la fréquence f$_s$. Ici, typiquement, la fréquence f$_s$ est comprise entre 1 MHz et 300 MHz.

Les ports 8 et 10 sont directement raccordés, respectivement, aux bornes 18 et 20 d'une charge résistive Rc. La charge Rc peut être une simple résistance dans le cas le plus simple. Elle peut aussi être un circuit d'adaptation qui présente les deux bornes 18 et 20 ainsi que deux bornes de sortie. Les bornes de sortie sont elles-mêmes raccordées à une charge électrique auxiliaire qui n'est pas uniquement résistive. Par exemple, la charge auxiliaire peut être une charge inductive ou une charge capacitive ou un mélange des deux. Le circuit d'adaptation est configuré pour que l'impédance entre les bornes 18 et 20 soit purement résistive à la fréquence f$_s$. Un tel circuit d'adaptation est connu et n'est donc pas décrit ici plus en détail. Dans de nombreux cas, on pourra placer un montage redresseur entre les ports 8 et 10 pour fournir une tension continue dont la valeur sera différente de la tension continue d'entrée V$_{in}$. Toutefois, l'impédan-

ce vue entre les ports 8 et 10 restera sensiblement résistive à la fréquence $f_s$ et ce grâce à l'adjonction éventuelle d'un circuit d'adaptation.

L'onduleur 2 comporte une inductance Lf et un interrupteur I raccordés en série entre les ports 4 et 6. Ici, l'inductance Lf est directement raccordée, d'un côté, au port 4, et, du côté opposé, à l'interrupteur I.

Dans cette description, par « raccordée, d'un côté, à un premier élément et, du côté opposé, à un second élément », on désigne le fait qu'une première broche et une seconde broche de raccordement électrique du composant sont raccordées, respectivement, au premier et au second éléments. Dans le cas d'une inductance, ces première et seconde broches sont les deux extrémités opposées de la bobine qui forme cette inductance. Dans le cas d'un condensateur, les première et seconde broches sont celles directement raccordées aux deux électrodes du condensateur.

L'interrupteur I est un interrupteur commandable comportant deux bornes 22 et 24 de puissance et une borne 26 de commande. Ici, la borne 22 est directement raccordée à l'inductance Lf. La borne 24 est directement raccordée au port 6. La borne 26 de commande est raccordée à un circuit 28 de pilotage de l'interrupteur I.

L'interrupteur I est apte à commuter, de façon réversible et en réponse à un signal de commande reçu sur sa borne 26, entre un état fermé et un état ouvert. Dans l'état fermé, les bornes 22 et 24 sont électriquement raccordées entre elles. Dans cet état fermé, la résistance électrique la plus faible entre les bornes 22 et 24 est connue sous le terme de résistance $R_{on}$. Dans l'état ouvert, les bornes 22 et 24 sont électriquement isolées l'une de l'autre, c'est-à-dire que la résistance électrique entre les bornes 22 et 24 est cent ou mille fois supérieure à la résistance $R_{on}$. Par exemple, dans l'état ouvert, la résistance entre les bornes 22 et 24 est supérieure à 1 MΩ ou 10 MΩ.

L'interrupteur I est apte à commuter à la fréquence $f_s$. Par exemple, l'interrupteur I est un transistor à effet de champ tel qu'un transistor à effet de champ à grille isolée connue sous l'acronyme MOSFET (« Metal Oxyde Semiconductor Field Effect Transistor »). Plus précisément, dans cet exemple de réalisation, l'interrupteur I est un MOSFET dont le drain correspond à la borne 22 et la source correspond à la borne 24. La borne 26 correspond à la grille de ce transistor.

Le circuit 28 commande la commutation de l'interrupteur entre ses états ouvert et fermé. Plus précisément, le circuit 28 est configuré pour que, sur une période $T_s$ de fonctionnement, l'interrupteur I est continûment dans l'état fermé pendant un premier intervalle de temps, puis continûment dans l'état ouvert pendant un second intervalle de temps. La durée des premier et second intervalles sont égales, respectivement, à $\alpha T_s$ et $(1 - \alpha)T_s$, où :

- $T_s$ est la durée de la période et donc égale à $1/f_s$, et
- $\alpha$ est un ratio compris entre 0 et 1, connu sous le terme de "rapport cyclique" ou sous le terme anglais de « duty cycle ».

Généralement, le ratio $\alpha$ est choisi entre 0,2 et 0,5 ou entre 0,25 et 0,4.

A cet effet, le circuit 28 peut comporter son propre oscillateur ou être raccordé à la borne 22 pour déclencher automatiquement la commutation de l'interrupteur I quand la tension présente sur la borne 22 franchit un seuil prédéterminé.

L'onduleur 2 comporte une inductance Ls et un condensateur Cs raccordés en série avec l'interrupteur I entre les ports 8 et 10 de sortie. Ici, l'inductance Ls et le condensateur Cs sont raccordés en série entre le port 8 et la borne 22 de l'interrupteur I. Plus précisément, dans cet exemple de réalisation, le condensateur Cs est, d'un côté, directement raccordé au port 8 et, du côté opposé, directement raccordé à l'inductance Ls. L'inductance Ls est aussi directement raccordée à la borne 22.

Dans ce mode de réalisation, un condensateur Cp est directement raccordé entre les bornes 22 et 24. Il est donc placé en parallèle de l'interrupteur I. Ainsi, d'un côté, le condensateur Cp est directement raccordé à l'inductance Ls et, du côté opposé, le condensateur Cp est directement raccordé au port 10.

L'inductance Ls et les condensateurs Cs et Cp sont aussi directement raccordés en série les uns aux autres entre les ports 8 et 10.

Enfin, l'onduleur 2 comporte un résonateur piézoélectrique 30. Ce résonateur 30 comporte :

- une première électrode conductrice 32,
- une seconde électrode conductrice 34, et
- un matériau piézoélectrique 36 interposé entre les électrodes 32 et 34.

Ce résonateur 30 présente une fréquence de résonance $f_{RP}$ comprise entre $1,5f_s$ et $2,5f_s$ et, de préférence, entre $1,9f_s$ et $2,1f_s$. Ici, la fréquence $f_{RP}$ est égale à $2f_s$. Par conséquent, le résonateur 30 est apte à osciller de façon continue à la fréquence $2f_s$ lorsqu'il est excité par la tension présente entre les bornes 22 et 24.

Le matériau piézoélectrique 36 présente au moins un coefficient de couplage électromécanique important, c'est-à-dire supérieur à 5 % ou 10 %. Par exemple, le matériau 36 est choisi dans le groupe constitué du quartz, du $BaTiO_3$, du PZT (Titano-Zirconate de Plomb), de l'AIN (Nitrure d'Aluminium) et du $NiNbO_3$.

Ici, les électrodes 32 et 34 du résonateur 30 sont directement raccordées, respectivement, à l'inductance Lf et au port 6 par l'intermédiaire de liaisons électriques, respectivement, 40 et 42.

Le résonateur 30 élimine les harmoniques de rang pair dans la tension $V_I$ entre les bornes 22 et 24, de sorte que la contrainte en tension aux bornes de l'interrupteur I est diminuée. La contrainte en tension est connue sous le terme anglais de "switching voltage stress" ou "voltage stress". Par exemple, typiquement, ici, la contrainte en tension aux bornes de l'interrupteur I est inférieure à 2,5$V_{in}$ ou 2$V_{in}$ et, de préférence, inférieure à 1,7$V_{in}$ ou 1,5$V_{in}$. Puisque la contrainte en tension est diminuée, à performance égale avec un onduleur de classe $\Phi_2$, les contraintes techniques sur le choix de l'interrupteur sont relâchées. Ce relâchement sur les contraintes techniques est ici mis à profit :

- pour choisir, à rendement égal, un interrupteur I de dimension plus petite que celui présent dans un onduleur de classe $\Phi_2$, et/ou
- pour choisir un interrupteur dont la résistance $R_{on}$ est plus faible et donc pour accroître le rendement de l'onduleur 2 par rapport à un onduleur de classe $\Phi_2$ présentant le même encombrement.

Le rendement d'un onduleur est ici le ratio $P_{out}/P_{in}$ exprimé en pourcentage où :

- $P_{out}$ est la puissance électrique délivrée à la charge Rc, et
- $P_{in}$ est la puissance électrique délivrée par la source 16.

Ici, sauf s'il est indiqué le contraire, les différentes liaisons électriques entre les différents composants de l'onduleur 2 sont, par exemple, des pistes électriques d'une carte de circuit imprimé. Ces différents composants de l'onduleur 2 sont donc soudés sur ces pistes électriques ou réalisés par gravure d'une couche de métallisation de la carte de circuit imprimé.

La figure 2 représente le schéma électrique équivalent du résonateur 30 et des liaisons 40 et 42.

Le schéma électrique équivalent du résonateur 30 comporte une première et une seconde branches qui sont raccordées en parallèle entre les électrodes 32 et 34. La première branche comporte successivement une résistance Rm, un condensateur Cm et une inductance Lm directement raccordés les uns aux autres en série entre les électrodes 32 et 34. La seconde branche comporte un condensateur $C_0$ directement raccordé, d'un côté, à l'électrode 32 et, du côté opposé, à l'électrode 34.

Ici, le résonateur 30 présente un facteur k de couplage supérieur à 0,3 ou 0,5 et, généralement, inférieur à 0,9 ou 0,95. Le facteur k de couplage est défini par la relation suivante : k = $(Cm/C_0)^{0,5}$.

Ce schéma représente également les inductances et les résistances parasites introduites par les liaisons filaires 40 et 42. Ici, les inductances parasites des liaisons 40 et 42 sont notées, respectivement, Lr1 et Lr2, et les résistances parasites des liaisons 40 et 42 sont notées, respectivement, Rr1 et Rr2.

Le dimensionnement des différents composants de l'onduleur 2 va maintenant être décrit pour les conditions expérimentales suivantes :

- la fréquence $f_s$ est égale à 1,4 MHz,
- le ratio a (rapport cyclique) est égal à 0,3,

- le résonateur est un résonateur piézoélectrique commercialisé sous la référence Z0.75T25D-W(C-213) par la société Fuji Ceramics Corporation®,
- les liaisons 40 et 42 sont identiques et les inductances parasites Lr1 et Lr2 sont toutes les deux égales à 40 nH et les résistances parasites Rr1 et Rr2 sont toutes les deux égales à 200 $\mu\Omega$,
- l'interrupteur I est un MOSFET présentant entre ses bornes 22 et 24 une capacité parasite, notée $C_{oss}$, négligeable et une résistance $R_{on}$ égale à 0,015 $\Omega$,
- la charge Rc est égale à 27 $\Omega$,
- la tension continue $V_{in}$ est égale à 20 Vdc, et
- la puissance électrique $P_{out}$ délivrée à la charge Rc est égale à 12 W.

Dans le cas particulier du résonateur 30 utilisé pour construire cet exemple d'onduleur 2, le matériau 36 est une céramique C213 commercialisé par la société Fuji Ceramics Corporation®. Il se présente sous la forme d'un disque de 25 mm de diamètre et de 0,75 mm d'épaisseur. La fréquence $f_{RP}$ de résonance série est égale à 2,8 MHz et la fréquence $f_a$ de résonance parallèle est égale à 3,12 MHz. De plus, il a été déterminé que l'impédance $Z(f_{RP})$ du résonateur 30 à la fréquence $f_{RP}$ est de 306,2 m$\Omega$ et que son impédance $Z(f_a)$ est égale à 290,60 $\Omega$. A partir de ces informations, il a été calculé que la résistance Rm, les capacités des condensateurs Cm et $C_0$ et l'inductance Lm du résonateur 30 sont égales, respectivement, à 0,225 $\Omega$, 2,02 nF, 8,6 nF et 1,55 nH. Le facteur k de couplage du résonateur 30 est donc égal à 0,48.

Les différents composants de l'onduleur 2 sont dimensionnés pour que l'interrupteur I commute au zéro de tension. La commutation au zéro de tension est plus connue sous l'acronyme ZVS (« zero voltage switching »). Ici, on considère que l'interrupteur I commute au zéro de tension si la tension entre ses bornes 22 et 24 au moment où il commute est inférieure à $V_{in}/5$ et, de préférence, inférieure à 2 V.

Le procédé de dimensionnement des différents composants de l'onduleur 2 est ici inspiré de celui mis en œuvre pour dimensionner les différents composants d'un onduleur de classe $\Phi_2$. Le procédé de dimensionnement d'un onduleur de classe $\Phi_2$ est par exemple décrit dans l'article suivant : Rivas Juan M et Al :"A high-Frequency Resonant Inverter Topology With Low-Voltage Stress", IEEE Trans. Power Electron. 23, n°4, 1759-1771, 2008.

Pour cela, il est procédé expérimentalement et par simulation numérique jusqu'à trouver les valeurs adaptées des composants qui permettent d'obtenir une commutation de l'interrupteur I au zéro de tension. Plus précisément, les étapes suivantes sont réitérées jusqu'à l'obtention des valeurs satisfaisantes pour les différents composants de l'onduleur 2 :

- étape 1) : des valeurs pour les différents composants de l'onduleur 2 sont choisies. puis,

- étape 2) : l'onduleur, dimensionné avec les valeurs choisies à l'étape 1), est simulé pour vérifier que l'interrupteur I commute bien au zéro de tension. Dans l'affirmative, le dimensionnement des différents composants est terminé. Dans la négative, le procédé retourne à l'étape 1) et une ou plusieurs valeurs des composants sont modifiées.

L'étape 1) est réalisée en tenant compte du savoir-faire empirique suivant :

- la valeur de l'inductance Lf est choisie entre $0{,}3Lf_{ini}$ et $3Lf_{ini}$ et, de préférence, entre $0{,}5Lf_{ini}$ et $2Lf_{ini}$, où l'inductance $Lf_{ini}$ est définie par la relation (1) suivante : $Lf_{ini} = 1/(9\pi^2 f_s C_0)$.

Ensuite, la valeur de l'inductance Ls est choisie entre $0{,}3Ls_{ini}$ et $3Ls_{ini}$ et, de préférence, entre $0{,}5Ls_{ini}$ et $2Ls_{ini}$, où $Ls_{ini}$ est défini par la relation (2) suivante :

-

$$- Ls_{ini} = X_s/(2\pi f_s), \text{ et}$$

et

- la réactance $X_s$ est égale à $Rc(((4V_{in})/(\pi\sqrt{2}))^2 / (P_{out}Rc) - 1)^{0,5}$.

La capacité du condensateur Cs est choisie entre $0{,}3Cs_{ini}$ et $3Cs_{ini}$ et, de préférence, entre $0{,}5Cs_{ini}$ et $2CS_{ini}$, où $Cs_{ini}$ est défini par la relation (3) suivante : $Cs_{ini} = 1/(2\pi f_s Rc)$.

La capacité du condensateur Cp est initialement prise égale à zéro, puis progressivement augmentée à chaque nouvelle itération de l'étape 1). La capacité du condensateur Cp est toutefois généralement inférieure à la capacité du condensateur $C_0$ du résonateur 30.

Par exemple, pour la première exécution de l'étape 1) du procédé de dimensionnement, les inductances Lf, Ls et les capacités de condensateurs Cs et Cp sont choisies égales, respectivement, à $Lf_{ini}$, $Ls_{ini}$, $Cs_{ini}$ et 0.

Avec ce procédé de dimensionnement des composants de l'onduleur 2 et pour les conditions expérimentales spécifiées précédemment, les valeurs suivantes ont été établies pour, respectivement, les inductance Lf, Ls et les capacités des condensateurs Cs et Cp : 800 nH, 1,4 μH, 9,4 nF et 1220 pF.

A ce stade, il est souligné que les mêmes valeurs obtenues pour les différents composant de l'onduleur 2 lorsqu'il est utilisé en tant qu'onduleur, conviennent aussi pour un fonctionnement de l'onduleur 2 en tant que redresseur. De plus, le circuit 28 de pilotage de l'interrupteur I peut être conservé inchangé.

Afin de pouvoir comparer les performances de l'onduleur 2 à celles d'un onduleur connu de classe $\Phi_2$, en parallèle, un onduleur de classe $\Phi_2$ a été dimensionné pour les mêmes conditions expérimentales puis fabriqué. Ensuite, les performances de l'onduleur 2 fabriqué ont été comparées à celles de l'onduleur de classe $\Phi_2$ fabriqué.

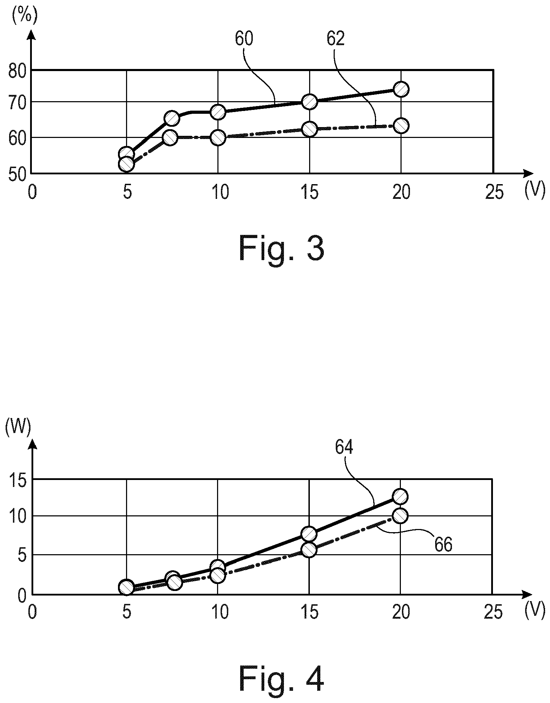

Le graphe de la figure 3 montre l'évolution du rendement de l'onduleur 2 en fonction de la tension continue $V_{in}$. La courbe 60 représente l'évolution du rendement de l'onduleur 2 tandis que la courbe 62 représente l'évolution du rendement de l'onduleur de classe $\Phi_2$.

Le graphe de la figure 4 montre l'évolution de la puissance $P_{out}$ en fonction de la tension continue $V_{in}$. Sur ce graphe, les courbes 64 et 66 représentent l'évolution de la puissance $P_{out}$, respectivement, de l'onduleur 2 et de l'onduleur de classe $\Phi_2$.

Ces graphes montrent que l'utilisation du résonateur 30 améliore le rendement de l'onduleur 2 par rapport au rendement d'un onduleur de classe $\Phi_2$. De plus, il a aussi été vérifier que la présence du résonateur 30 diminue la contrainte en tension aux bornes de l'interrupteur I. Par exemple, la tension la plus élevée entre les bornes 22 et 24 de l'interrupteur I est ici inférieure à $2V_{in}$ et souvent inférieure à $1{,}7V_{in}$ ou $1{,}5V_{in}$.

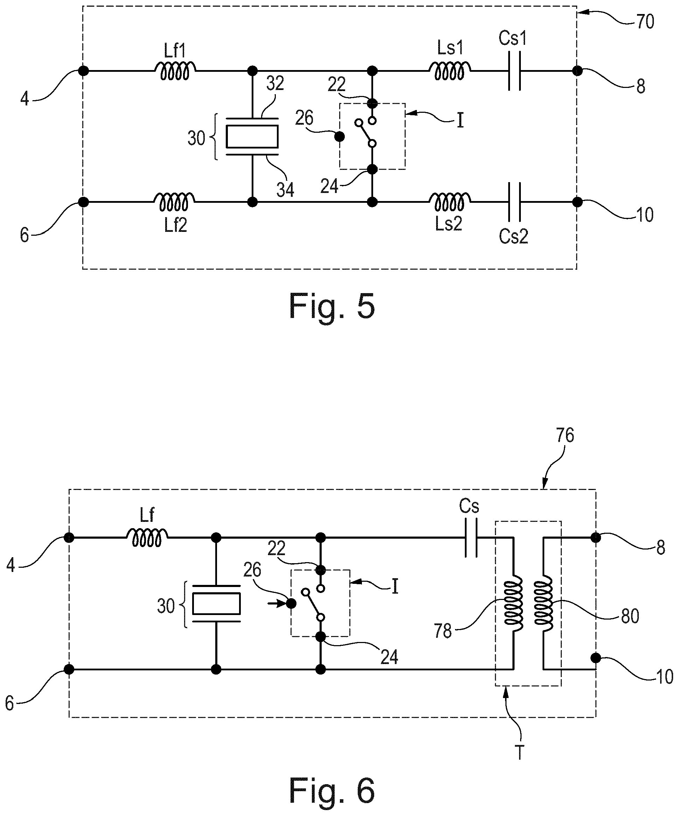

La figure 5 représente un onduleur réversible 70 identique à l'onduleur 2 sauf qu'ils incorporent trois variantes possibles de cet onduleur 2. Sur cette figure et les suivantes, pour simplifier les illustrations, le circuit 28 de pilotage, la source 16 et la charge Rc ne sont pas représentés.

La première variante consiste à remplacer une inductance Lf par deux inductances Lfl et Lf2. L'inductance Lfl est directement raccordée entre le port 4 et la borne 22 de l'interrupteur I. L'inductance Lf2 est directement raccordée entre la borne 24 et le port 6. Typiquement, la somme des valeurs des inductances Lfl et Lf2 est égale à la valeur de l'inductance Lf. En fait, il est possible de répartir la valeur de l'inductance Lf comme désiré entre les valeurs des inductances Lfl et Lf2.

La deuxième variante consiste à remplacer le circuit LC série formé par l'inductance Ls et le condensateur Cs par un premier et un second circuits LC série. Le premier circuit LC série est formé par une inductance Lsl et un condensateur Csl directement raccordés en série entre le port 8 et la borne 22. Le second circuit LC série est formé par une inductance Ls2 et un condensateur Cs2 directement raccordés en série entre le port 10 et la borne 24 de l'interrupteur I. Comme pour la première variante, la somme des valeurs des inductances Lsl et Ls2 est prise égale à la valeur de l'inductance Lf. De même, les capacités des condensateurs Csl et Cs2 vérifient la relation suivante : 1/Csl + 1/Cs2 = 1/Cs. A partir du moment où ces deux égalités sont respectées, il est possible de répartir la valeur de l'inductance Lf et de la capacité du condensateur Cs comme désiré entre les valeurs des inductances Lfl et Lf2 et les capacités des condensateurs Csl et Cs2.

La troisième variante consiste à omettre le condensateur Cp. Pour cela, les valeurs de l'inductance Ls et du condensateur Cs sont dimensionnées pour obtenir la commutation au zéro de tension avec un condensateur Cp dont la capacité est nulle.

Bien que décrite dans un cas particulier où ces trois variantes sont combinées dans un même mode de réalisation, ces trois variantes peuvent aussi être mises en œuvre indépendamment les unes des autres.

La figure 6 représente un onduleur réversible 76 identique à l'onduleur 2 sauf que l'inductance Ls est réalisée à l'aide d'un transformateur T. Le transformateur T comporte un enroulement primaire 78 et un enroulement secondaire 80 magnétiquement couplés l'un à l'autre. L'enroulement 78 est directement raccordé en série avec le condensateur Cs entre les bornes 22 et 24 de puissance de l'interrupteur I. L'enroulement 80 est directement raccordé entre les ports 8 et 10 de sortie.

Ainsi, dans ce mode de réalisation, les ports 8 et 10 sont isolés, par une isolation galvanique, de l'interrupteur I et du résonateur 30.

Dans ce mode de réalisation, la valeur de l'inductance du transformateur T ramenée au primaire est dimensionnée de façon similaire à ce qui a été décrit pour l'inductance Ls, de sorte qu'il remplace cette inductance Ls. Ainsi, l'inductance Ls telle que décrite en référence à la figure 1 est remplacée par le transformateur T dans ce mode de réalisation.

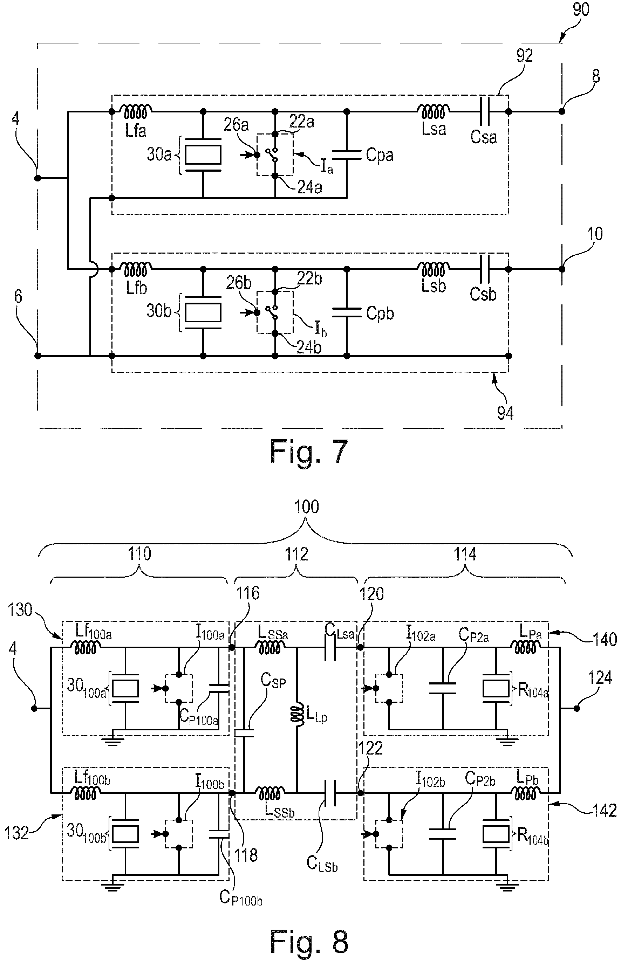

Ce qui a été décrit jusqu'à présent dans le cas où l'onduleur réversible comporte un seul interrupteur commandable s'applique aussi au cas des onduleurs réversibles comportant plusieurs interrupteurs commandables. Par exemple, cela s'applique au montage connu sous le nom anglais de « push-pull ». Par exemple, la figure 7 représente un onduleur réversible 90 à montage « push-pull ». De façon schématique, ce montage « push-pull » consiste à utiliser deux onduleurs 2 et à raccorder leur sortie en mode différentiel. Ainsi, ici, l'onduleur 90 comporte une partie supérieure 92 et une partie inférieure 94 raccordées entre les ports 4 et 6 d'entrée et les ports 8 et 10 de sortie.

La partie supérieure 92 est structurellement identique ici à l'onduleur 2. Ainsi, les mêmes références sont utilisées pour désigner les mêmes composants, sauf que la lettre « a » est ajoutée à cette référence.

La partie inférieure 94 est structurellement identique à la partie supérieure 92. Ainsi, les mêmes références sont utilisées pour désigner les mêmes composants, sauf que la lettre « a » est remplacée par la lettre « b ». Typiquement, les valeurs des inductances et des capacités des condensateurs de la partie inférieure 94 sont prises égales aux valeurs des inductances correspondantes et des capacités des condensateurs correspondants dans la partie supérieure 92. Par contre, les interrupteurs $I_a$ et $I_b$ ne sont pas commandés de la même façon. Par exemple, ils sont commandés pour commuter en opposition de phase.

La structure générale et le principe de fonctionnement d'un tel onduleur à montage « push-pull » est connue. Par exemple, ceci est décrit dans les articles suivants :

- Article A3 : John S. Glaser et Al : "A 500 W Push-Pull Dc-Dc Power Converter with a 30 MHz Switching Frequency", 978-1-4244-4783-1, IEEE, 2010, et
- Article A5 : Lei Gu et Al : "High-Frequency Resonant Converter with Synchronous Rectification for High Conversion Ratio and Variable Load Operation", The 2018 International Power Electronics Conference, IEEE, 2018.

En ce qui concerne le dimensionnement des composants de l'onduleur 90, celui-ci est réalisé comme décrit dans les articles A3 et A5, sauf que l'on utilise les plages de valeurs possibles décrites en référence à la figure 1 pour les inductances Lfa, Lsa et la capacité du condensateur Csa pour établir les valeurs initiales et borner les valeurs possibles des différents composants de l'onduleur 90.

La figure 8 représente un autre exemple où le raccordement d'un résonateur piézoélectrique entre les bornes de puissance d'un interrupteur commandable d'un onduleur est intéressant. Plus précisément, la figure 8 représente un convertisseur continu-continu 100. Le convertisseur 100 comporte :

- une section 110 de conversion d'une tension continue $V_{in}$ reçue sur un port 4 d'entrée en une tension alternative délivrée entre des ports 116 et 118 de sortie,
- une section 112 d'adaptation d'impédance raccordée entre les ports 116 et 118 et qui délivre la tension sinusoïdale filtrée sur des ports de sortie 120 et 122, et
- une section 114 de conversion de la tension alternative délivrée entre les ports 120 et 122 en une tension continue $Vdc_{out}$ délivrée sur un port 124 de sortie.

Dans ce mode de réalisation, la tension $V_{in}$ est égale à la différence de potentiels entre le port 4 et la masse. La tension $Vdc_{out}$ est égale à la différence de potentiels entre le port 124 et la masse du convertisseur 100.

La section 110 comporte deux onduleurs 130 et 132 montés en montage « push-pull » comme déjà décrit en référence à la figure 7. Chacun des onduleurs 130, 132 est structurellement identique à l'onduleur 2 sauf que l'inductance Ls et le condensateur Cs sont intégrés dans les inductances et les condensateurs de la section 112. Dans ces conditions, les composants des onduleurs 130 et 132 qui sont structurellement identiques à ceux de l'onduleur 2 portent les mêmes références mais suivies de l'indice « 100a » pour l'onduleur 130 et de l'indice « 100b » pour l'onduleur 132.

La section 112 d'adaptation est structurellement identique à celle décrite dans l'article A5. Elle n'est donc pas décrite ici plus en détail.

La section 114 comporte deux redresseurs 140 et 142 montés en montage « push-pull » comme décrit dans l'article A5. Les deux redresseurs 140 et 142 sont structurellement identiques l'un à l'autre. Dans ces conditions, les composants du redresseur 142 qui sont identiques à ceux du redresseur 140 portent la même référence mais suivie de l'indice « b » au lieu de l'indice « a ».

Le redresseur 140 est un onduleur réversible utilisé pour transformer la tension alternative entre les ports 120 et 122 en une tension continue délivrée entre le port 124 et la masse. A cet effet, ici, la structure du redresseur 140 est identique à celle de l'onduleur 130. Ainsi, le redresseur 140 comporte un interrupteur commandable $I_{102a}$ et un condensateur $C_{P2a}$ raccordés en parallèle l'un de l'autre directement entre le port 120 et la masse. L'interrupteur $I_{102a}$ est par exemple identique à l'interrupteur I de la figure 1. De plus, il est commandé de la même façon.

Le redresseur 140 comporte aussi un résonateur piézoélectrique $R_{104a}$ raccordé en parallèle, directement, entre les bornes de puissance de l'interrupteur $I_{102a}$. Le résonateur $R_{104a}$ est ici identique au résonateur 30.

Enfin, le port 120 est directement raccordé au port 124 de sortie en passant par l'intermédiaire d'une inductance $L_{Pa}$.

Le dimensionnement des différents composants du convertisseur 100 est par exemple réalisé comme décrit dans l'article A5, sauf que l'on utilise les plages de valeurs possibles décrites en référence à la figure 1 pour les composants correspondants des onduleurs 130 et 132.

**Chapitre** II : Variantes :

L'onduleur 2 n'est pas nécessairement réalisé sous la forme d'un circuit imprimé sur lequel sont soudés la plupart des composants de cet onduleur. Par exemple, en variante, les composants de l'onduleur 2 sont soudés sur une céramique formant également le matériau piézoélectrique du résonateur piézoélectrique. Dans un autre mode de réalisation possible, les différents composants de l'onduleur 2 sont co-intégrés sur une même puce de silicium. Il est aussi envisageable de réaliser l'onduleur 2 par impression 3D ou tout autre technologie.

En variante, le condensateur Cs est omis. Dans ce cas, la tension alternative $V_{out}$ oscille non pas autour de 0 Vdc mais autour d'une tension continue et constante différente de 0 Vdc.

Dans un autre mode de réalisation, le condensateur Cs est directement raccordé d'un côté au port 10 et, du côté opposé, à la borne 24 de l'interrupteur I. Dans ce cas, l'inductance Ls est directement raccordée d'un côté au port 8 et, du côté opposé, à la borne 22 de l'interrupteur I.

L'ordre dans lequel l'inductance Ls et le condensateur Cs sont raccordés l'un à l'autre peut être interverti.

En variante, l'inductance Lf est raccordée entre le port 6 et la borne 24 de l'interrupteur I. Dans ce cas, la borne 22 de l'interrupteur I est directement raccordée au port 4.

De nombreux autres modes de réalisation de l'interrupteur I sont possibles. Par exemple, l'interrupteur I peut être un transistor IGBT (« Insulated-Gate Bipolar Transistor »), un transistor bipolaire, un thyristor ou tout autre type d'interrupteur capable de commuter à la fréquence $f_s$.

Les électrodes 32 et 34 peuvent être raccordées directement aux bornes 22 et 24 de l'interrupteur I par toutes solutions envisageables comme, par exemple, des pistes électriques de la carte de circuit imprimé. En fait, ce qui compte, c'est que le résonateur 30 soit raccordé en parallèle de l'interrupteur I entre les bornes 22 et 24.

Ce qui a été décrit s'applique à toutes fréquences $f_s$ et même pour des fréquences $f_s$ inférieures à 1 MHz ou inférieures à 500 kHz. Toutefois, comme indiqué, de préférence, la fréquence $f_s$ est supérieure à 1 MHz car cela améliore la densité de puissance et le temps de réponse de l'onduleur. Par exemple, la fréquence $f_s$ est comprise entre 1 MHz et 300 MHz ou entre 1 MHz et 200 MHz ou entre 1 MHz et 100 MHz, ou seulement dans la plage des très hautes fréquences comprises entre 30 MHz et 300 MHz. La fréquence $f_s$ peut aussi être comprise seulement dans la plage des hautes fréquences, c'est-à-dire entre 1 MHz et 30 MHz.

Les valeurs de la résistance Rm, des capacités des condensateurs Cm et $C_0$ et de l'inductance Lm du résonateur piézoélectrique ont ici été déterminées à partir de mesures réalisées sur un résonateur piézoélectrique du commerce. En variante, les valeurs de la résistance Rm, les capacités des condensateurs Cm et $C_0$ et de l'inductance Lm sont d'abord fixées puis le résonateur piézoélectrique correspondant est ensuite construit avec ces caractéristiques électriques. Pour cela, il est possible d'ajuster les différentes dimensions du matériau piézoélectrique 36 pour obtenir les caractéristiques électriques souhaitées. Toutefois, lors de la fixation des valeurs de la résistance Rm, des capacités des condensateurs Cm et $C_0$ et de l'inductance Lm, il faut prendre en compte certaines contraintes enfin qu'il soit possible de réaliser le résonateur piézoélectrique correspondant. Par exemple, le facteur de couplage k doit être inférieur à un et, généralement, inférieur à 0,9 ou 0,95. De même, les choix possibles pour la résistance Rm, pour le condensateur Cm et pour l'inductance Lm sont limités. Ainsi, même dans ce cas, il faut adapter les valeurs des autres composants de l'onduleur pour qu'il soit possible de construire le résonateur piézoélectrique qui présente les caractéristiques électriques requises.

Ce qui a été décrit ici s'applique au cas où l'onduleur n'est pas réversible. Ainsi, tout ce qui a été décrit ici s'applique au cas où le convertisseur électrique est un onduleur non-réversible ou un redresseur non-réversible.

## Chapitre III : Avantages des modes de réalisation décrits :

Les convertisseurs décrits ici fonctionnent à des fréquences $f_s$ supérieures à 1 MHz. Par conséquent, les valeurs des inductances et des condensateurs sont beaucoup plus petites que si la fréquence $f_s$ était plus basse. Les dimensions des inductances et des condensateurs sont donc petites, ce qui réduit l'encombrement du convertisseur. Cela se traduit également par une densité de puissance du convertisseur beaucoup plus élevée. De plus, comme les valeurs des inductances et des condensateurs sont petites, il est possible de réaliser ces inductances et ces condensateurs directement par des pistes électriques gravées sur la carte de circuit imprimé. Cela simplifie donc également la fabrication d'un tel convertiseur.

Le fait de travailler à une fréquence $f_s$ supérieure à 1 MHz améliore également le temps de réponse du convertisseur.

La présence du résonateur piézoélectrique directement raccordé entre les bornes de puissance de l'interrupteur commandable permet d'éliminer, dans la tension présente entre ses bornes de puissance, les harmoniques de rang pair. Grâce à cela, la contrainte en tension aux bornes de cet interrupteur est réduite. Ici, la contrainte en tension est réduite à une valeur inférieure à $2{,}5V_{in}$ ou à $2V_{in}$. A titre de comparaison, la contrainte en tension dans des onduleurs de classe $\Phi_2$ est supérieure à $2{,}5V_{in}$. Dans les onduleurs de classe E, la contrainte en tension est supérieure à $3{,}5\ V_{in}$. A cause de cette réduction de la contrainte en tension, il est possible :

- d'utiliser un interrupteur moins encombrant et donc, à performance égale, de réduire l'encombrement du convertisseur, et/ou
- d'utiliser un interrupteur présentant une résistance $R_{on}$ plus faible pour une même tension continue et donc, à encombrement égal, d'augmenter le rendement du convertisseur.

La dispersion des caractéristiques d'un résonateur piézoélectrique est beaucoup plus faible par rapport à d'autres types de résonateur comme des circuits LC résonants. Ainsi, puisque les caractéristiques du résonateur piézoélectrique sont connues avec plus de précision, les erreurs sur le dimensionnement des autres composants du convertisseur sont réduites. En fin de compte, cela améliore le rendement du convertisseur.

Les caractéristiques électriques d'un résonateur piézoélectrique sont moins sensibles aux variations de température que d'autres types de résonateur comme un circuit LC résonant. Ainsi, la plage de température à l'intérieur de laquelle le convertisseur peut fonctionner avec un rendement supérieur à un seuil prédéterminé est plus grande lorsqu'un résonateur piézoélectrique est utilisé que si un autre type de résonateur était utilisé.

Le fait que le facteur de qualité du résonateur piézoélectrique soit supérieur à cinquante permet d'obtenir un bon rendement et lorsque ce facteur de qualité est supérieur à cent, un très bon rendement est obtenu. On notera à ce sujet que le facteur de qualité d'un résonateur piézoélectrique est facilement supérieur à trois cents, alors qu'un résonateur LC à généralement un facteur de qualité très inférieur à cinquante.

Le fait que le convertisseur comporte seulement un seul interrupteur commandable simplifie l'architecture du convertisseur et diminue son encombrement.

Le fait de dimensionner les différents composants du convertisseur pour que l'interrupteur commandable commute au zéro de tension, réduit fortement les déperditions énergétiques du convertisseur sous forme de chaleur. Cela contribue donc à augmenter fortement le rendement du convertisseur.

## Revendications

1. Convertisseur électrique choisi dans le groupe constitué d'un onduleur apte à générer une tension alternative à partir d'une tension continue et d'un redresseur apte à générer une tension continue à partir d'une tension alternative, ce convertisseur comportant :

   - un premier et un second ports (4, 6) de tension continue par l'intermédiaire desquels est reçue ou délivrée la tension continue,
   - un premier et un second ports (8, 10) de tension alternative par l'intermédiaire desquels est reçue ou délivrée la tension alternative,
   - une première inductance (Lf; Lfl, Lf2; Lfa, Lfb; $Lf_{100a}$, $Lf_{100b}$, $L_{Pa}$, $L_{Pb}$) et un interrupteur (I; Ia, Ib; $I_{100a}$, $I_{100b}$, $I_{102a}$, $I_{102b}$) commandable raccordés en série entre les premier et second ports (4, 6) de tension continue, l'interrupteur commandable comportant une première (22) et une seconde (24) bornes de puissance et une borne (26) de commande, l'interrupteur commandable étant raccordé à la première inductance par l'intermédiaire d'une de ses bornes de puissance, cet interrupteur étant apte, en réponse à un signal de commande reçu sur sa borne de commande, à commuter à une fréquence supérieure à 1 MHz et de façon réversible, entre :

     - un état fermé dans lequel ses deux bornes de puissance sont électriquement raccordées l'une à l'autre, et
     - un état ouvert dans lequel ses deux bornes de puissance sont électriquement isolées l'une de l'autre,

   - une seconde inductance (Ls; Ls1, Ls2; T; Lsa, Lsb; $L_{SSa}$, $L_{Lp}$, $L_{SSb}$) traversée par un courant dont l'intensité est modulée par l'interrupteur commandable, cette seconde inductance et l'interrupteur étant raccordés en série entre les premier et second ports de tension alternative,

**caractérisé en ce que** le convertisseur comporte un résonateur piézoélectrique ($30$; $30a$, $30b$; $30_{100a}$, $30_{100b}$, $R_{104a}$, $R_{104b}$) comportant :

    - une première électrode ($32$) directement raccordée à la première borne de puissance de l'interrupteur,
    - une seconde électrode ($34$) directement raccordée à la seconde borne de puissance de l'interrupteur, et
    - un matériau piézoélectrique ($36$) interposé entre les première et seconde électrodes ;

ledit résonateur piézoélectrique étant apte à éliminer les harmoniques de rang pair dans la tension à travers ledit interrupteur commandable.

2. Convertisseur selon la revendication 1, dans lequel :

    - le convertisseur comporte un circuit ($28$) de pilotage de la commutation de l'interrupteur raccordé à la borne ($26$) de commande de cet interrupteur, ce circuit de pilotage étant configuré pour faire commuter périodiquement l'interrupteur entre l'état ouvert et l'état fermé, la fréquence de commutation de l'interrupteur de son état ouvert vers son état fermé étant égale à une fréquence $f_s$, et
    - le résonateur piézoélectrique présente une fréquence de résonance comprise entre $1,5f_s$ et $2,5f_s$.

3. Convertisseur selon la revendication 2, dans lequel la fréquence $f_s$ est comprise entre 1 MHz et 300 MHz et, de préférence, comprise entre 10 MHz et 300 MHz.

4. Convertisseur selon l'une quelconque des revendications précédentes, dans lequel le facteur de qualité du résonateur piézoélectrique est supérieur ou égal à cinquante ou cent.

5. Convertisseur selon l'une quelconque des revendications précédentes, dans lequel les différents composants du convertisseur sont dimensionnés de manière à ce que, à chaque fois que l'interrupteur ($I$; $Ia$, $Ib$; $I_{100a}$, $I_{100b}$, $I_{102a}$, $I_{102b}$) commute, la tension entre ses bornes de puissance est inférieure à 2 V.

6. Convertisseur selon l'une quelconque des revendications précédentes, dans lequel le convertisseur comporte un seul interrupteur commandable ($I$).

7. Convertisseur selon l'une quelconque des revendications précédentes, dans lequel la première inductance ($Lf$; $Lfl$, $Lf2$; $Lfa$, $Lfb$; $Lf_{100a}$, $Lf_{100b}$, $L_{Pa}$, $L_{Pb}$) est comprise entre $0,3Lf_{ini}$ et $3Lf_{ini}$, où $Lf_{ini}$ est égal à $1/(9\pi^2 f_s C_0)$, où :

    - $f_s$ est la fréquence de commutation de l'interrupteur commandable, et
    - $C_0$ est la capacité série du résonateur piézoélectrique.

8. Convertisseur selon l'une quelconque des revendications précédentes, dans lequel la valeur de la seconde inductance est comprise entre $0,3Ls_{ini}$ et $3Ls_{ini}$, où $Ls_{ini}$ est égal à $X_s/(2\pi f_s)$ et la réactance $X_s$ est égale à $Rc((4V_{in}/\pi\sqrt{2})^2 / (P_{out}Rc) - 1)^{0,5}$, où

    - $f_s$ est la fréquence de commutation de l'interrupteur commandable,
    - $V_{in}$ est la tension continue entre les premier et second ports de tension continue lorsque le convertisseur est utilisé en tant qu'onduleur,
    - $Rc$ est la résistance électrique de la charge raccordée entre les ports de tension alternative lorsque le convertisseur est utilisé en tant qu'onduleur, et
    - $P_{out}$ est la puissance délivrée aux bornes de la charge résistive raccordée entre les ports de tension alternative.

9. Convertisseur selon l'une quelconque des revendications précédentes, dans lequel le convertisseur comporte un condensateur ($Cp$) directement raccordé, d'un côté, à la première borne de puissance et, du côté opposé, à la seconde borne de puissance.

10. Convertisseur selon l'une quelconque des revendications précédentes, dans lequel le convertisseur est un onduleur.

**Patentansprüche**

1. Elektrischer Leistungswandler, der aus der Gruppe ausgewählt ist, die aus einem Wechselrichter, der dazu fähig ist, aus einer Gleichspannung eine Wechselspannung zu erzeugen, und einem Gleichrichter, der dazu fähig ist, aus einer Wechselspannung eine Gleichspannung zu erzeugen, besteht, wobei dieser Leistungswandler Folgendes umfasst:

    - eine erste und eine zweite Gleichspannungsklemme ($4$, $6$), über die die Gleichspannung empfangen oder bereitgestellt wird,
    - eine erste und eine zweite Wechselspannungsklemme ($8$, $10$), über die die Wechselspannung empfangen oder bereitgestellt wird,
    - eine erste Induktivität ($Lf$; $Lfl$, $Lf2$; $Lfa$, $Lfb$; $Lf_{100a}$, $Lf_{100b}$, $L_{Pa}$, $L_{Pb}$) und einen steuerbaren Schalter (I; Ia, Ib; $I_{100a}$, $I_{100b}$, $I_{102a}$, $I_{102b}$), die zwischen der ersten und der zweiten Gleichspannungsklemme (4, 6) in Reihe verbunden sind, wobei der steuerbare Schalter einen ersten (22) und einen zweiten (24) Leistungsanschluss und einen Steueranschluss (26) umfasst, wobei der steuerbare Schalter über einen seiner Leistungsanschlüsse mit der ersten Induktivität verbunden ist, wobei dieser Schalter dazu fähig ist, als Reaktion auf ein Steuersignal, das an seinem Steueranschluss empfangen wird, mit einer Frequenz größer als 1 MHz und reversibel zwischen Folgendem umzuschalten:

- einem geschlossenen Zustand, in dem seine zwei Leistungsanschlüsse elektrisch miteinander verbunden sind, und
- einem geöffneten Zustand, in dem seine zwei Leistungsanschlüsse elektrisch voneinander getrennt sind,

- eine zweite Induktivität (Ls; Ls1, Ls2; T; Lsa, Lsb; $L_{SSa}$, $L_{Lp}$, $L_{SSb}$), durch die ein Strom fließt, dessen Stärke durch den steuerbaren Schalter moduliert wird, wobei diese zweite Induktivität und der Schalter zwischen der ersten und der zweiten Wechselspannungsklemme in Reihe verbunden sind,

**dadurch gekennzeichnet, dass** der Leistungswandler einen piezoelektrischen Resonator (30; 30a, 30b; $30_{100a}$, $30_{100b}$, $R_{104a}$, $R_{104b}$) umfasst, der Folgendes umfasst:

- eine erste Elektrode (32), die direkt mit dem ersten Leistungsanschluss des Schalters verbunden ist,
- eine zweite Elektrode (34), die direkt mit dem zweiten Leistungsanschluss des Schalters verbunden ist, und
- ein piezoelektrisches Material (36), das zwischen der ersten und der zweiten Elektrode eingefügt ist;

wobei der piezoelektrische Resonator dazu fähig ist, die geradzahligen Oberschwingungen in der Spannung über dem steuerbaren Schalter zu eliminieren.

2. Leistungswandler nach Anspruch 1, wobei:

- der Leistungswandler eine Schaltung (28) zum Ansteuern des Umschaltens des Schalters umfasst, die mit dem Steueranschluss (26) dieses Schalters verbunden ist, wobei diese Ansteuerungsschaltung dazu konfiguriert ist, den Schalter periodisch zwischen dem geöffneten Zustand und dem geschlossenen Zustand umschalten zu lassen, wobei die Umschaltfrequenz des Schalters von seinem geöffneten Zustand in seinen geschlossenen Zustand gleich einer Frequenz $f_s$ ist, und
- der piezoelektrische Resonator eine Resonanzfrequenz aufweist, die zwischen $1,5f_s$ und $2,5f_s$ liegt.

3. Leistungswandler nach Anspruch 2, wobei die Frequenz $f_s$ zwischen 1 MHz und 300 MHz liegt und vorzugsweise zwischen 10 MHz und 300 MHz liegt.

4. Leistungswandler nach einem der vorhergehenden Ansprüche, wobei der Qualitätsfaktor des piezoelektrischen Resonators größer als oder gleich fünfzig oder hundert ist.

5. Leistungswandler nach einem der vorhergehenden Ansprüche, wobei die unterschiedlichen Komponenten des Leistungswandlers so ausgelegt sind, dass jedes Mal, wenn der Schalter (I; Ia, Ib; $I_{100a}$, $I_{100b}$, $I_{102a}$, $I_{102b}$) umschaltet, die Spannung zwischen seinen Leistungsanschlüssen kleiner als 2 V ist.

6. Leistungswandler nach einem der vorhergehenden Ansprüche, wobei der Leistungswandler einen einzigen steuerbaren Schalter (I) umfasst.

7. Leistungswandler nach einem der vorhergehenden Ansprüche, wobei die erste Induktivität (Lf; Lf1, Lf2; Lfa, Lfb; $Lf_{100a}$, $Lf_{100b}$, $L_{Pa}$, $L_{Pb}$) zwischen $0,3Lf_{ini}$ und $3Lf_{ini}$ liegt, wobei $Lf_{ini}$ gleich $1/(9\pi^2 f_s C_0)$ ist, wobei:

- $f_s$ die Umschaltfrequenz des steuerbaren Schalters ist und
- $C_0$ der Reihenwiderstand des piezoelektrischen Resonators ist.

8. Leistungswandler nach einem der vorhergehenden Ansprüche, wobei der Wert der zweiten Induktivität zwischen $0,3Ls_{ini}$ und $3Ls_{ini}$ liegt, wobei $Ls_{ini}$ gleich $X_s/(2\pi f_s)$ ist und der Blindwiderstand $X_s$ gleich $Rc((4V_{in}/\pi\sqrt{2})^2 / (P_{out}Rc) - 1)^{0,5}$ ist, wobei

- $f_s$ die Umschaltfrequenz des steuerbaren Schalters ist,
- $V_{in}$ die Gleichspannung zwischen der ersten und der zweiten Gleichspannungsklemme ist, wenn der Leistungswandler als Wechselrichter verwendet wird,
- Rc der elektrische Widerstand der zwischen den Wechselstromklemmen verbundenen Last ist, wenn der Leistungswandler als Wechselrichter verwendet wird, und
- $P_{out}$ die Leistung ist, die den Anschlüssen der Widerstandslast, die zwischen den Wechselspannungsklemmen verbunden ist, bereitgestellt wird.

**9.** Leistungswandler nach einem der vorhergehenden Ansprüche, wobei der Leistungswandler einen Kondensator (Cp) umfasst, der auf einer Seite mit dem ersten Leistungsanschluss und auf der entgegengesetzten Seite mit dem zweiten Leistungsanschluss direkt verbunden ist.

**10.** Leistungswandler nach einem der vorhergehenden Ansprüche, wobei der Leistungswandler ein Wechselrichter ist.

## Claims

**1.** Electrical converter chosen from the group consisting of an inverter able to generate an AC voltage from a DC voltage and a rectifier able to generate a DC voltage from an AC voltage, this converter comprising:

- a first and a second DC voltage port (4, 6) via which the DC voltage is received or delivered,
- a first and a second AC voltage port (8, 10) via which the AC voltage is received or delivered,
- a first inductor (Lf; Lf1, Lf2; Lfa, Lfb; $Lf_{100a}$, $Lf_{100b}$, $L_{Pa}$, $L_{Pb}$) and a controllable switch (I; Ia, Ib; $I_{100a}$, $I_{100b}$, $I_{102a}$, $I_{102b}$) that are connected in series between the first and second DC voltage ports (4, 6), the controllable switch comprising a first (22) and a second (24) power terminal and a control terminal (26), the controllable switch being connected to the first inductor via one of its power terminals, this switch being able, in response to a control signal received on its control terminal, to switch at a frequency greater than 1 MHz and reversibly, between:

- a closed state in which its two power terminals are electrically connected to one another, and
- an open state in which its two power terminals are electrically isolated from one another,

- a second inductor (Ls; Ls1, Ls2; T; Lsa, Lsb; $L_{SSa}$, $L_{Lp}$, $L_{SSb}$) flowed through by a current whose strength is modulated by the controllable switch, this second inductor and the switch being connected in series between the first and second AC voltage ports, **characterized in that** the converter comprises a piezoelectric resonator (30; 30a, 30b; $30_{100a}$, $30_{100b}$, $R_{104a}$, $R_{104b}$) comprising:

- a first electrode (32) connected directly to the first power terminal of the switch,
- a second electrode (34) connected directly to the second power terminal of the switch, and
- a piezoelectric material (36) interposed between the first and second electrodes; said piezoelectric resonator being able to eliminate even-order harmonics in the voltage through said controllable switch.

**2.** Converter according to Claim 1, wherein:

- the converter comprises a circuit (28) for driving the switching of the switch, connected to the control terminal (26) of this switch, this drive circuit being configured so as to periodically switch the switch between the open state and the closed state, the switching frequency of the switch from its open state to its closed state being equal to a frequency $f_s$, and
- the piezoelectric resonator has a resonant frequency between $1.5f_s$ and $2.5f_s$.

**3.** Converter according to Claim 2, wherein the frequency $f_s$ is between 1 MHz and 300 MHz and, preferably, between 10 MHz and 300 MHz.

**4.** Converter according to any one of the preceding claims, wherein the quality factor of the piezoelectric resonator is greater than or equal to fifty or one hundred.

**5.** Converter according to any one of the preceding claims, wherein the various components of the converter are dimensioned such that, each time the switch (I; Ia, Ib; $I_{100a}$, $I_{100b}$, $I_{102a}$, $I_{102b}$) switches, the voltage between its power terminals is less than 2 V.

**6.** Converter according to any one of the preceding claims, wherein the converter comprises a single controllable switch (I).

**7.** Converter according to any one of the preceding claims, wherein the first inductor (Lf; Lf1, Lf2; Lfa, Lfb; $Lf_{100a}$, $Lf_{100b}$, $L_{Pa}$, $L_{Pb}$) is between $0.3Lf_{ini}$ and $3Lf_{ini}$, where $Lf_{ini}$ is equal to $1/(9\pi^2 f_s C_0)$, where:

- $f_s$ is the switching frequency of the controllable switch, and
- $C_0$ is the series capacitance of the piezoelectric resonator.

**8.** Converter according to any one of the preceding claims, wherein the value of the second inductor is between $0.3Ls_{ini}$ and $3Ls_{ini}$, where $Ls_{ini}$ is equal to $X_s/(2\pi f_s)$ and the reactance $X_s$ is equal to $Rc((4V_{in}/\pi\sqrt{2})^2 / (P_{out}Rc) - 1)^{0.5}$, where

- $f_s$ is the switching frequency of the controllable switch,
- $V_{in}$ is the DC voltage between the first and second DC voltage ports when the converter is used as an inverter,

- Rc is the electrical resistance of the load connected between the AC voltage ports when the converter is used as an inverter, and

- $P_{out}$ is the power delivered to the terminals of the resistive load connected between the AC voltage ports.

9. Converter according to any one of the preceding claims, wherein the converter comprises a capacitor (Cp) connected directly, on one side, to the first power terminal and, on the opposite side, to the second power terminal.

10. Converter according to any one of the preceding claims, wherein the converter is an inverter.

Fig. 1

Fig. 2

(%)

60    62

80
70
60
50

0    5    10    15    20    25    (V)

## Fig. 3

(W)

64

15
10
5

66

0    5    10    15    20    25    (V)

## Fig. 4

Fig. 5

Fig. 6

Fig. 7

Fig. 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **RIVAS JUAN M et al.** A high-Frequency Resonant Inverter Topology With Low-Voltage Stress. *IEEE Trans. Power Electron,* 2008, vol. 23 (4), 1759-1771
- **JOHN S. GLASER et al.** A 500 W Push-Pull Dc-Dc Power Converter with a 30 MHz Switching Frequency. IEEE, 2010
- High-Frequency Resonant Converter with Synchronous Rectification for High Conversion Ratio and Variable Load Operation. **LEI GU et al.** The 2018 International Power Electronics Conference. IEEE, 2018